# EUROPÄISCHE PATENTANMELDUNG

(11) **EP 2 980 779 A1**
(43) Veröffentlichungstag der Anmeldung: **03.02.2016**
(21) Anmeldenummer: 14191416.8
(22) Anmeldetag: 03.11.2014
(51) Int. Cl.: G09F 13/04, B60K 37/06, G09F 13/08, H01H 9/18, H01H 13/02

(54) **Anzeigeeinheit mit Symbolanzeige und Schaltfunktion**

(30) Priorität: 29.07.2014 DE 102014110763
(71) Anmelder: Fahrzeugtechnik Miunske GmbH, 02692 Großpostwitz (DE)
(72) Erfinder: Miunske, Johannes, 02692 Großpostwitz (DE)
(74) Vertreter: Weissfloh, Ingo

(57) **Zusammenfassung**

Der Erfindung liegt die Aufgabe zugrunde, eine Anzeigeeinheit bereitzustellen, die eine Zustandsanzeige mit einer farblich umschaltbaren Symbolanzeige kombiniert und die Option für eine Schaltfunktion bietet. Die Zustandsanzeige soll dazu einen der zugeordneten Baugruppe bzw. einen damit im Zusammenhang stehenden Messwert und/oder eine Warnung anzeigen.

Die Anzeigeeinheit (1) mit LED-beleuchteter Symbolanzeige (2) und Schaltfunktion besitzt neben der Symbolanzeige (2) eine Zustandsanzeige (3), bestehend aus ein, zwei oder mehrere einzeln ansteuerbaren LED (4).

So sind auf einer Trägerplatine (5) eine Hintergrundbeleuchtungs-LED (6) und ein, zwei oder mehrere zu einer Bargraphanzeige (3) zusammengefasste LED (4) angeordnet, wobei auf die Trägerplatine (5) eine Anzeigenabdeckung (7) gesetzt ist und in die Anzeigenabdeckung (7) eine teilweise lichtdurchlässige, die Symbole/Zeichen abbildende Streuscheibe (8) auf der Oberseite integriert ist und die Ausleuchtbereiche der Symbolanzeige (2) und der einzelnen LED (4) durch innerhalb der Anzeigenabdeckung (7) angeordnete Stege (9) getrennt sind.

## Beschreibung

Die Erfindung betrifft eine Anzeigeeinheit mit LED-beleuchteter Symbolanzeige, in die eine zugehörige Zustandsanzeige beispielsweise eine Bargraphanzeige und/oder eine Schaltfunktion integriert sind.

Die Symbolanzeige kann beispielsweise ein Lüftersymbol zeigen, das die Lüftungsanlage symbolisiert. Eine daneben angeordnete, als Bargraphanzeige ausgeführte Zustandsanzeige, die sich aus mehreren LED zusammensetzt, kann entsprechend die Lüfterstufe durch das Aufleuchten einer entsprechenden Anzahl von LED anzeigen.

Anzeigeeinheiten mit Symbolanzeige sind in unterschiedlichen Ausführungen bekannt. Bekannt sind Grafikanzeigen, die mit Bargraphanzeigen kombiniert sind. So sind beispielsweise Tachometeranzeigen bekannt, bei denen leuchtende LED-Balken die Geschwindigkeit anzeigen. Beleuchtete Symbolanzeigen, die in einen Schalter integriert sind, wie beispielsweise für die Warnblinkanlage, sind gleichfalls bekannt.

Weiter ist aus der DE 10 2012 110 700 A1 eine Anzeigeeinheit bekannt, die zwei unterschiedliche Grafiken alternativ oder zugleich anzeigen kann. Dazu ist die Anzeigeeinheit mit einer Polarisationsfilter-Baugruppe mit zwei Quellen, die unterschiedlich polarisiertes Licht aussenden, kombiniert. Durch das Zuschalten unterschiedlich polarisierten Lichtes einer Hintergrundbeleuchtung können unterschiedliche Grafiken angezeigt werden.

Der Erfindung liegt die Aufgabe zugrunde, eine Anzeigeeinheit bereitzustellen, die eine Zustandsanzeige mit einer farblich umschaltbaren Symbolanzeige kombiniert und die Option für eine Schaltfunktion bietet. Die Zustandsanzeige soll dazu einen der zugeordneten Baugruppe bzw. einen damit im Zusammenhang stehenden Messwert und/oder eine Warnung anzeigen.

Die Erfindungsaufgabe wird mit den Merkmalen des Hauptanspruchs gelöst.

Die Anzeigeeinheit mit Schaltfunktion und zugehöriger, vorzugsweise beleuchteter Symbolanzeige umfasst auf der Anzeigeeinheit neben der Symbolanzeige eine Zustandsanzeige, die aus einer, zwei oder mehreren einzeln ansteuerbaren LED besteht.

Durch die Vereinigung von Schaltfunktion, Symbolanzeige und Zustandsanzeige in einer Baueinheit kann erheblich Platz gespart werden. Zugleich sorgt die logische Zuordnung der drei Funktionen für eine bessere Übersichtlichkeit. Dadurch kann beispielsweise ein Fahrzeugführer die wichtigen Informationen einfacher und somit schneller erfassen. Durch die Verkürzung kann die Aufmerksamkeit des Fahrzeugführers stärker auf den Verkehr gerichtet bleiben, was wiederum zur Verkehrssicherheit beiträgt. Durch die kompakte Bauweise wird Platz gespart und damit der Tatsache Rechnung getragen, dass Fahrzeuge mit immer mehr Funktionen ausgestattet sind. Die Zustandsanzeige kann beispielsweise Statusanzeigen, wie z.B. Schaltzustände, als auch Messwerte wiedergeben. Die einzeln ansteuerbaren LEDs realisieren eine Bargraphanzeige.

Gemäß dem nebengeordneten Anspruch 2 umfasst die Lösung für die Anzeigeeinheit mit beleuchteter Symbolanzeige eine Trägerplatine, auf der eine Hintergrundbeleuchtungs-LED und eine, zwei oder mehrere zu einer Bargraphanzeige zusammengefasste LED angeordnet sind. Die Anzeigenabdeckung ist auf die Trägerplatine gesetzt und in die Anzeigenabdeckung eine teilweise lichtdurchlässige, die Symbole/Zeichen abbildende Streuscheibe auf der Oberseite integriert. Die Bereiche der Symbolanzeige und der einzelnen LEDs sind durch innerhalb der Anzeigenabdeckung angeordnete Stege getrennt. Durch die Stege wird vermieden, dass Streulicht in benachbarte Bereiche gelangt. Die Streuscheibe bildet die Darstellungen ab, die durch die Hintergrundbeleuchtungs-LED und ggf. die Bargraph-LED beleuchtet werden. Von der Symbolanzeige getrennt werden die einzelnen LEDs der Bargraphanzeige in der Abdeckung separat sichtbar. Die Bauweise ermöglicht es, alle elektrischen Elemente auf einer Platine zu platzieren. Die Abdeckung ist separat aufgesetzt. Durch eine entsprechende Führung kann die Abdeckung beweglich ausgeführt sein und so zugleich als Betätigungselement für einen Schalter vorgesehen werden.

Vorteilhafte Ausgestaltungen der Anzeigeeinheit mit Symbolanzeige und Schaltfunktion sind in den Unteransprüchen offenbart.

Gemäß einer zweckmäßigen Weiterbildung nach Anspruch 3 ist die Hintergrundbeleuchtungs-LED als Farbwechsel-LED, insbesondere RGB-LED, ausgeführt. Durch die damit gegebene Möglichkeit des Farbwechsels der Symbolanzeige können durch entsprechende Ansteuerung Warnungen angezeigt und zugleich hervorgehoben werden. Beispeisweise kann die Umschaltung des angezeigten Symbols auf Rot prinzipiell eine höhere Aufmerksamkeit des Nutzers bewirken und so problematische Zustände hervorheben. Die Option der Vielfarbigkeit eröffnet entsprechend der Verwendung der Anzeigeeinheit vielfältige Anzeigemöglichkeiten. Die Farben können entsprechend wunschgemäß programmiert werden.

Entsprechend einer Weiterbildung der Erfindung nach Anspruch 4 wirkt die Unterseite der Anzeigenabdeckung auf einen, zwei oder mehrere Kurzhubschalter, die auf der Trägerplatine angeordnet sind. Die Unterseite der Anzeigenabdeckung können deren Umschließungskanten oder andere mit der Anzeigenabdeckung verbundene Elemente sein, die durch Betätigung der Anzeigenabdeckung einen Schaltvorgang am Kurzhubschalter auslösen. Durch diesen prinzipiellen Aufbau ist es möglich, die Schaltfunktion durch die gleichfalls auf der Trägerplatine angeordneten Kurzhubschalter vorzusehen. Durch die Schaltfunktion können beispielsweise Baugruppen zugeschaltet oder in verschiedene Betriebszustände umgeschaltet werden. Auch eine Anzeigenumschaltung für eine multifunktionale Ausführung der Anzeigeeinheit ist möglich.

In einer Weiterbildung der Erfindung nach Anspruch 5 stellen die LED der Zustandsanzeige unterschiedliche Messwerte dar. Die einzelnen Messwerte können durch eine entsprechende Zahlenwertzuordnung neben oder auf den LED-Fenstern realisiert werden. Nebenstehende Zahlenwerte können wie das Symbol durch die Hintergrundbeleuchtung beleuchtet werden. Alternativ oder parallel können Warnungen beispielsweise durch Blinken, Farbwechsel etc. angezeigt werden.

Einer entsprechend vorteilhaften Ausgestaltung der Anzeigeeinheit nach Anspruch 6 weisen die LED unterschiedliche Farben auf. Die unterschiedlichen Farben können dabei beispielsweise durch LED in verschiedenen Farben oder durch RGB-LED realisiert werden.

Durch unterschiedlich aufleuchtende Farben der LED ist eine Bewertung der Messgröße möglich. Das Aufleuchten roter LED zeigt z.B. "Tank fast leer" oder "Temperatur zu hoch". Grüne LED zeigen dann an, dass sich die Werte im Sollwert-Bereich befinden. Die Farben von RGB-LED können bedarfsgerecht programmiert werden.

Einer vorteilhaften Ausgestaltung nach Anspruch 7 entsprechend sind die LED der Zustandsanzeige gruppiert statisch, sequenziell nacheinander abwechselnd, gruppiert blinkend und/oder als Lauflicht ansteuerbar. Ein Blinken oder Lauflicht der LED ermöglicht beispielsweise eine Erhöhung der Aufmerksamkeit, um z.B. kritische Werte hervorzuheben. Die vielfältigen Ansteuermöglichkeiten eröffnen breite Einsatzgebiete. Damit sind die Anzeigeeinheiten einerseits standardisierbar und zugleich multifunktional einsetzbar. Zugleich ist somit eine kostengünstige Herstellung der Anzeigeeinheiten durch modularen Aufbau in hoher Stückzahl gegeben.

Gemäß einer Weiterbildung der Anzeigeeinheit mit Symbolanzeige und Schaltfunktion nach Anspruch 8 ist die Schaltfunktion als Taster realisiert. Die Tasterfunktion ist dadurch gekennzeichnet, dass das Betätigungselement den eigentlichen Schalter drückt und das Betätigungselement durch eine Feder in seine Ausgangsposition zurückgestellt wird. Entsprechend der hinterlegten Schaltung kann somit ein Umschalten, wie z.B. EIN/AUS oder auch ein Durchschalten von Stufe 0 bis 4, z.B. bei der Heizung, durch eine entsprechende Anzahl von Betätigungen realisiert werden. Die Ausführung der Anzeigeeinheit als Taster ist kostengünstig, einfach zu bedienen und für viele Funktionen nutzbar.

Einer Weiterführung der Erfindung gemäß Anspruch 9 ist die Schaltfunktion als ein-, zwei- oder mehrdimensionaler Schalter realisiert. Ein eindimensionaler Schalter ist beispielsweise ein Wippschalter mit einer Achse, ein zweidimensionaler Schalter ein Wippschalter mit zwei Achsen. Ein eindimensionaler Schalter ermöglicht beispielsweise ein Durchschalten z.B. der Solltemperatur aufwärts und abwärts. Eindimensionale Schalter sind beispielsweise mit waagerechter Wippachse ausgeführt. Dazu sind dann die Kurzhubschalter auf der Trägerplatine oben und unten angeordnet.

Zweidimensionale Schalter ermöglichen bereits eine Menüführung oder die Einstellung von zwei Werten wie z.B. Temperatur und unterschiedliche Ventilationsgeschwindigkeiten der Lüftungsanlage. Ein zweidimensionaler Schalter kann ausgehend vom eindimensionalen Schalter durch zusätzliche, rechts und links auf der Platine angeordnete Kurzhubschalter realisiert werden.

Mehrdimensionale Schalter eröffnen weitere Möglichkeiten, Schaltfunktionen zu realisieren. Ein Drehschalter wäre eine weitere Möglichkeit zur Integration zusätzlicher Schaltfunktionen.

Einer vorteilhaften Ausgestaltung gemäß ist mit der Anzeigeeinheit ein die Umgebungshelligkeit erfassender Lichtsensor verbunden. Dieser Lichtsensor erfasst die Helligkeit beispielsweise im Fahrgastraum und steuert in Abhängigkeit davon die Helligkeit der LEDs der Anzeigeelemente.

Entsprechend einer Weiterbildung der Anzeigeeinheit mit Symbolanzeige und Schaltfunktion gemäß Anspruch 11 ist das Anzeigeelement mit einem akustischen Signalgeber verbunden. Akustische Signalgeber ermöglichen insbesondere ein Warnsignal bei Über- oder Unterschreitung zulässiger Werte. Durch das Warnsignal kann die Aufmerksamkeit auf die Anzeigeeinheiten gerichtet werden. Der Warnton kann ggf. in der Lautstärke und/oder Frequenz variieren. Das Warnsignal soll in der Regel ein zweckmäßiges Handeln auslösen, um einen Gefahrenzustand abzuwehren. Der akustische Signalgeber kann sowohl in die Anzeigeeinheit integriert als auch außerhalb angeordnet sein.

Gemäß einer Weiterbildung der Anzeigeeinheit mit Symbolanzeige und Schaltfunktion nach Anspruch 12 kann die Schaltfunktion eine Quittierungsfunktion umfassen. Damit kann sichergestellt werden, dass beispielsweise ein Fahrzeugführer ein akustisches Warnsignal tatsächlich wahrnimmt und mit einer Tastenbetätigung quittiert. Daraufhin würde das Warnsignal entsprechend verstummen.

Einer Ausgestaltung der Erfindung entsprechend Anspruch 13 ist die Anzeigeeinheit in ein Bussystem integriert. Bussysteme, wie das CAN-Bus-System, ermöglichen mit wenigen elektrischen Anschlüssen eine bidirektionale Informationsübertragung durch ein entsprechend definiertes Protokoll. Bussysteme erlauben daher die Integration der Anzeigeeinheit in gängige KFZ-Systeme und somit eine herstellerunabhängige Lösung, die zugleich kostengünstig und universell einsetzbar ist. Neben der Integration in andere Systeme sind mittels Bussystemen Insellösungen realisierbar.

Entsprechend einer Weiterbildung der Erfindung gemäß Anspruch 14 sind eine oder mehrere Anzeigeeinheiten in einer Anzeigebaugruppe zusammengefasst. Die Zusammenfassung der Anzeigeeinheiten vereinfacht z.B. die elektrischen Anschlüsse über gemeinsame Steckverbindungen und Mehrfachnutzung einzelner Leitungen. Auch können so Armaturen standardisiert werden, um entsprechend die einsetzbaren Anzeigeeinheiten integrieren zu können. Die Anzeigebaugruppe kann Anzeigeeinheiten sowohl mit als auch ohne Schaltfunktion umfassen.

Mehrere Ausführungsbeispiele der Erfindung werden anhand der Zeichnungen näher erläutert. Es zeigen:
Fig. 1 eine Anzeigeeinheit mit Symbolanzeige und Bargraphanzeige,
Fig. 2 eine Anzeigeeinheit mit Wippschalter,
Fig. 3 eine Anzeigeeinheit mit zweidimensionalem Schalter,
Fig. 4 eine Anzeigebaugruppe und
Fig. 5 den Aufbau einer Anzeigeeinheit.

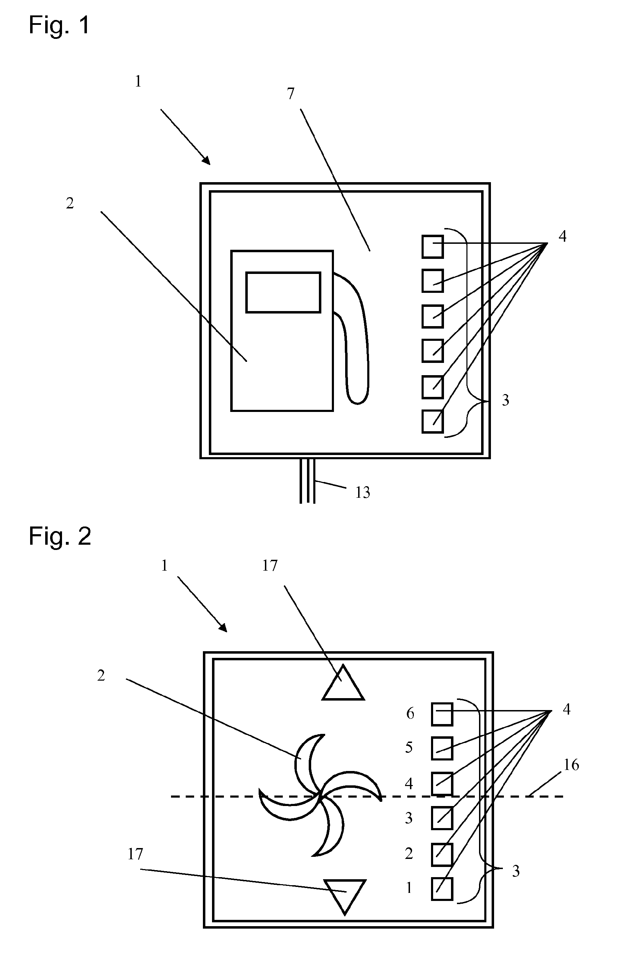

In Figur 1 ist eine Anzeigeeinheit 1 mit Symbolanzeige 2 und Zustandsanzeige 3 beispielsweise einer Bargraphanzeige 3 dargestellt. Symbolanzeige 2 und Zustandsanzeige 3 sind in die Anzeigenelementabdeckung 7 integriert, die bei der Ausführung mit Schaltfunktion zugleich als Betätigungselement 7 des Schalters dient. Die Symbolanzeige 2 stellt eine Tanksäule dar, um den Tankinhalt zu symbolisieren. Die daneben angeordnete Bargraphanzeige 3, bestehend aus mehreren LEDs 4, stellt als Balkenanzeige 3 den Tankfüllstand dar. Der Füllstand wird durch die Anzahl der leuchtenden LED 4 angezeigt. Je mehr LED 4 leuchten, um so voller ist der Tank. Die Farben können zusätzlich den Füllstand anzeigen und bewerten, indem beispielsweise rot für "fast leer" steht. Ein Blinken der roten LED 4 kann die Aufmerksamkeit des Fahrers erhöhen. Es können sowohl LEDs unterschiedlicher Farbe als auch Farbwechsel- LEDs (RGB-LED) 4 verwendet werden. Der Anschluss erfolgt durch Integration im Bussystem 13.

Figur 2 zeigt eine aus Figur 1 hervorgehende Anzeigeeinheit 1 mit Symbolanzeige 2 und Zustandsanzeige 3. Als Symbol 2 ist hier ein Lüfter dargestellt. Die aus LEDs 4 bestehende Bargraphanzeige 3 stellt die Lüfterstufen dar. Zusätzlich zur Symbolanzeige 2 lassen sich Buchstaben oder wie in Figur 2 dargestellt, Ziffern 1 bis 6 anzeigen, die hier die Lüfterstufen darstellen. Ebenso können konkrete Werte wie z.B. Temperaturangaben angegeben sein. Weiterhin ist die Anzeigeeinheit 1 als Wippschalter 17 ausgeführt. Die Wippachse 16 gibt die Beweglichkeit des Wippschalters 17 an. Entsprechende Pfeile 17 auf dem Wippschalter 17 zeigen an, in welcher Richtung der Wippschalter 17 benutzt werden kann. Unter den Pfeilen 17 sind auf der Platine (nicht dargestellt) die Kurzhubschalter (nicht dargestellt) positioniert, die die Schaltfunktion realisieren. Durch die Betätigung des Wippschalters 17 lassen sich im Beispiel höhere oder niedrigere Drehzahlen des Lüfters einstellen.

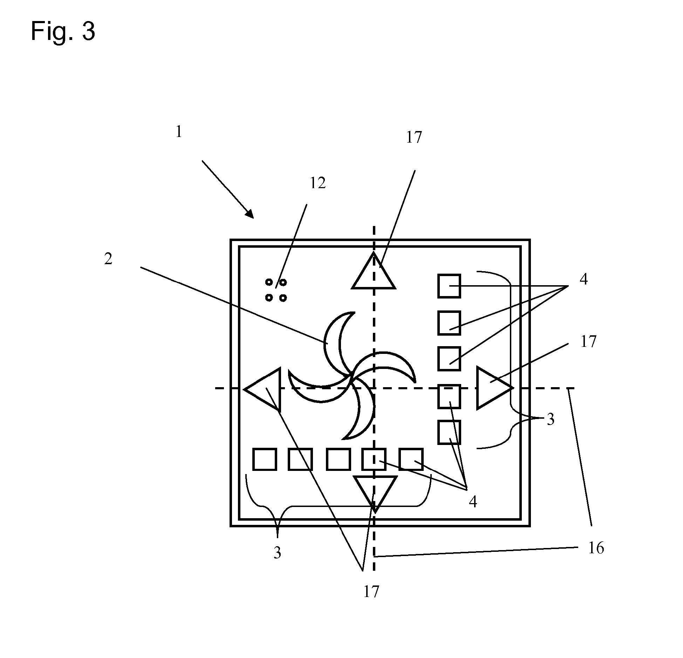

In Figur 3 ist eine aus Figur 2 hervorgehende Anzeigeeinheit 1 mit einem zweidimensionalen Schalter 17 dargestellt. Der zweidimensionale Wippschalter 17 hat entsprechend zwei Wippachsen 16. So lassen sich beispielsweise Lüfterstufen und Temperatur mit einer Schalt-Anzeigeeinheit einstellen und mit der Zustandsanzeige 3 darstellen. Hier sind auch zwei mit LED 4 realisierte Zustandsanzeigen 3 dargestellt. Eine Zustandsanzeige 3 kann beispielsweise die Lüfterstufen und die andere Zustandsanzeige 3 die Temperatur darstellen. Weiterhin kann ein akustischer Signalgeber 12 vorhanden sein, der bei kritischen Betriebszuständen, Ausfall von Aggregaten, Sollwertabweichungen etc. einen Signalton abgibt, um die Aufmerksamkeit des Benutzers auf die Anzeigeeinheit zu lenken. Die Schalter 17 können mit einer Quittierungsfunktion versehen sein, um beispielsweise durch Betätigung des Schalters 17 zu bestätigen, dass die optische und/oder akustische Warnung wahrgenommen wurde.

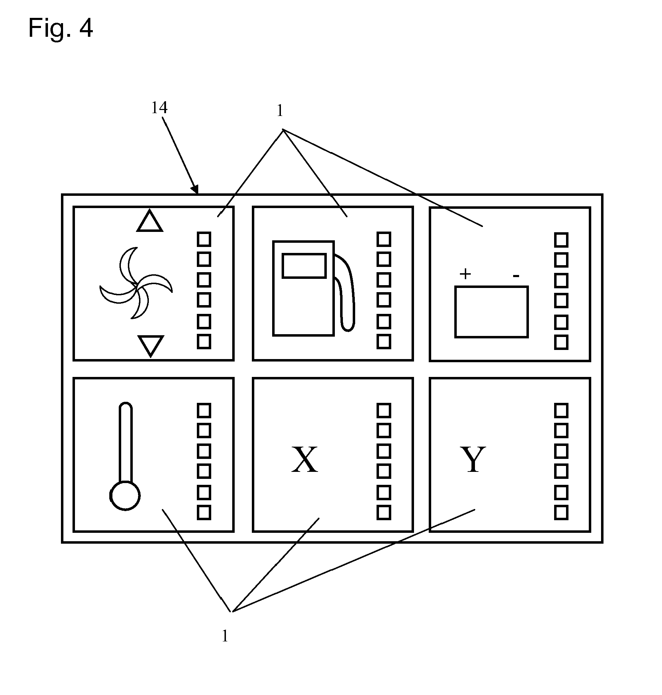

Die Figur 4 zeigt eine Anzeigeeinheiten- Baugruppe 9, die mehrere Anzeigeneinheiten 1 zusammenfasst. Die Anzeigeeinheiten- Baugruppe 14 ist vormontiert und die Bussystem-Anschlüsse (nicht dargestellt) können zusammengefasst bzw. zusammengeführt sein.

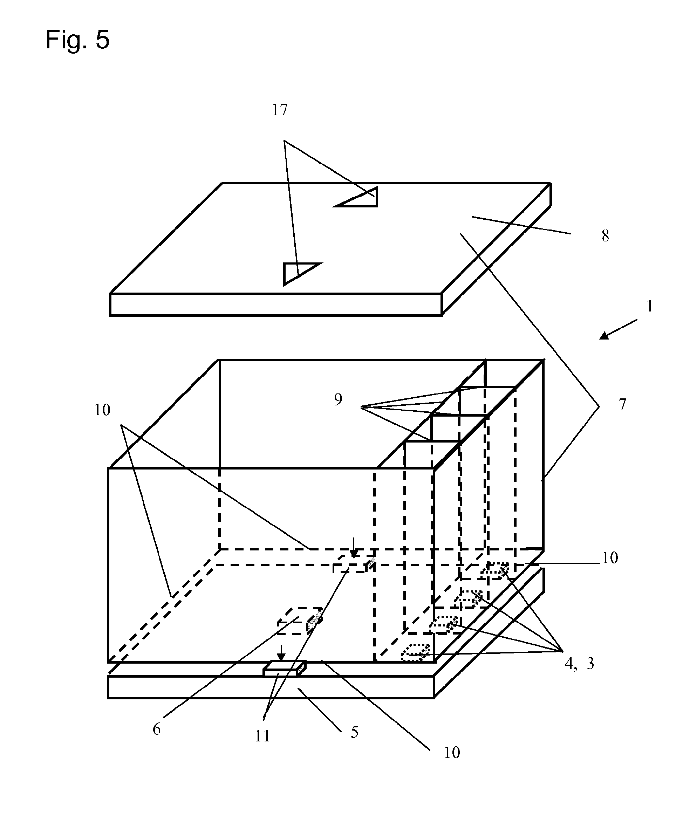

In Figur 5 ist der Aufbau einer Anzeigeeinheit 1 in einer teilzerlegten, räumlichen Darstellung gezeigt. Träger der Anzeigeeinheit 1 ist eine Trägerplatine 5, auf der alle elektronischen Bauelemente wie die Bargraph-LED 4 und die Hintergrundbeleuchtungs-LED 6 sowie die elektrischen Verbindungen, Anschlusskontakte, Microprozessoren (nicht dargestellt) etc. angeordnet sind. Über die Bauelemente ist eine Anzeigenelementabdeckung 7 gesetzt, in die auf der Oberseite eine Streuscheibe 8 integriert ist. Auf der Streuscheibe 8, die gleichzeitig das Anzeigeelement 1 darstellt, ist das Symbol der Symbolanzeige (nicht dargestellt) und ggf. Ziffern, Buchstaben etc., die den LEDs 4 der Bargraphanzeige 3 zugeordnet sind, dargestellt. Um zu vermeiden, dass das Licht nicht in angrenzende Bereiche der Streuscheibe 8 gelangt, sind in die Anzeigenelementabdeckung 7 Trennstege 9 integriert. Somit wird realisiert, dass jeder LED 4, 6 ein eindeutiger Bereich/Fenster auf der Streuscheibe 8 zugeordnet ist. Der bisher beschriebene Aufbau kann als Anzeigeelement 1 mit Symbolanzeige 2 und Bargraphanzeige 3 genutzt werden. Weiterhin ist es denkbar, das teile des Anzeigeelementes 1 als Touchscreen ausgebildet ist. Hier können bei Betätigung weitere Informationen abgefragt werden, die über das Bussystem Verbindungen zu Messstellen usw. besitzen.

Der Aufbau bietet gleichfalls die Integration von Schaltfunktionen. Dazu sind auf der Trägerplatine 5 im Bereich der Umschließungskanten 10 der Anzeigenelementabdeckung 7, die zugleich als Betätigungselement 17 ausgebildet ist, Kurzhubschalter 11 angeordnet. Durch eine entsprechende Betätigung des Betätigungselementes 17 wird die Schaltfunktion, hier als Wippschalter, ausgeführt. Selbstverständlich können die Kurzhubschalter 11 auch an anderer Position der Trägerplatine 5 angeordnet sein. Die Schaltfunktion kann dann beispielsweise durch mit der Anzeigenelementabdeckung 7 verbundenen Bauteilen (nicht dargestellt), die auf die Kurzhubschalter 11 wirken, realisiert sein. Weiterhin lässt sich die Abstrahlhelligkeit der LEDs 4, 6 durch einen die Umgebungshelligkeit erfassenden Helligkeitssensor an die Umgebungsbedingungen anpassen.

### Zusammenstellung der Bezugszeichen

- 1: - Anzeigeeinheit, Anzeigeelement
- 2: - Symbolanzeige
- 3: - Zustandsanzeige, Bargraphanzeige, Balkenanzeige
- 4: - LED, Bargraph-LED
- 5: - Trägerplatine
- 6: - Hintergrundbeleuchtungs-LED
- 7: - Anzeigenelementabdeckung, Betätigungselement des Schalters
- 8: - Streuscheibe
- 9: - Steg, Trennsteg
- 10: - Unterseite, Umschließungskanten
- 11: - Kurzhubschalter
- 12: - akustischen Signalgeber
- 13: - Bussystem, CAN-Bus, Anschlussleitungen
- 14: - Anzeigebaugruppe
- 15: - Ziffern
- 16: - Wippachse
- 17: - Wippschalter, Pfeile, Betätigungselemente des Wippschalters

## Patentansprüche

1. Anzeigeeinheit (1) mit LED-beleuchteter Symbolanzeige (2) und Schaltfunktion,
**dadurch gekennzeichnet,**
**dass** neben der Symbolanzeige (2) eine Zustandsanzeige (3), bestehend aus ein, zwei oder mehrere einzeln ansteuerbaren LEDs (4) angeordnet ist.

2. Anzeigeeinheit (1) mit beleuchteter Symbolanzeige (2),
**dadurch gekennzeichnet,**
**dass** auf einer Trägerplatine (5) eine Hintergrundbeleuchtungs-LED (6) und ein, zwei oder mehrere zu einer Bargraphanzeige (3) zusammengefasste LED (4) angeordnet sind, wobei auf die Trägerplatine (5) eine Anzeigenabdeckung (7) gesetzt ist und in die Anzeigenabdeckung (7) eine teilweise lichtdurchlässige, die Symbole/Zeichen abbildende Streuscheibe (8) auf der Oberseite integriert ist und die Ausleuchtbereiche der Symbolanzeige (2) und der einzelnen LED (4) durch innerhalb der Anzeigenabdeckung (7) angeordnete Stege (9) getrennt sind.

3. Anzeigeeinheit (1) nach Anspruch 1 oder 2,
**dadurch gekennzeichnet,**
**dass** die Hintergrundbeleuchtungs-LED (6) für die Beleuchtung der Symbolanzeige (2) als Farbwechsel-LED, insbesondere als RGB-LED, ausgeführt ist.

4. Anzeigeeinheit (1) nach einem der Ansprüche 2 oder 3,
**dadurch gekennzeichnet,**
**dass** die Unterseite (10) der Anzeigenabdeckung (7) auf mindestens einen auf der Trägerplatine (5) angeordneten Kurzhubschalter (11) wirkt.

5. Anzeigeeinheit (1) nach einem der Ansprüche 1 bis 4,
**dadurch gekennzeichnet,**
**dass** mittels der LED (4) der Zustandsanzeige (3) unterschiedliche Messwerte und/oder Warnungen darstellbar sind.

6. Anzeigeeinheit (1) nach Anspruch 1 bis 5,
**dadurch gekennzeichnet,**
**dass** die LED (4) der Zustandsanzeige (3) als Farbwechsel-LED ausgeführt sind.

7. Anzeigeeinheit (1) nach einem der Ansprüche 1 bis 6,
**dadurch gekennzeichnet,**
**dass** die LED (4) der Zustandsanzeige (3) gruppiert statisch, sequenziell nacheinander abwechselnd, gruppiert blinkend und/oder als Lauflicht ansteuerbar sind.

8. Anzeigeeinheit (1) nach einem der Ansprüche 1 bis 7,
**dadurch gekennzeichnet,**
**dass** die Schaltfunktion als Taster realisiert ist.

9. Anzeigeeinheit (1) nach einem der Ansprüche 1 bis 8,
**dadurch gekennzeichnet,**
**dass** die Schaltfunktion durch einen ein-, zwei- oder mehrdimensionalen Schalter realisiert ist.

10. Anzeigeeinheit (1) nach einem der Ansprüche 1 bis 9,
**dadurch gekennzeichnet,**
**dass** mit der Anzeigeeinheit (1) ein die Umgebungshelligkeit erfassender Lichtsensor verbunden ist, der die Helligkeit der LED (4) und Hintergrundbeleuchtungs-LED (6) beeinflusst.

11. Anzeigeeinheit (1) nach einem der Ansprüche 1 bis 10,
**dadurch gekennzeichnet,**
**dass** das Anzeigeelement (1) mit einem akustischen Signalgeber (12) gekoppelt ist.

12. Anzeigeeinheit (1) nach einem der Ansprüche 1 bis 11,
**dadurch gekennzeichnet,**
**dass** die Schaltfunktion eine Quittierungsfunktion umfasst.

13. Anzeigeeinheit (1) nach einem der Ansprüche 1 bis 12,
**dadurch gekennzeichnet,**
**dass** die Anzeigeeinheit (1) in ein Bussystem (13) integriert ist.

14. Anzeigeeinheit (1) nach einem der Ansprüche 1 bis 13,
**dadurch gekennzeichnet,**
**dass** mehrere Anzeigeeinheiten (1) in einer Anzeigebaugruppe (14) zusammengefasst sind.

15. Anzeigeeinheit (1) nach einem der Ansprüche 1 bis 14,
**dadurch gekennzeichnet,**
**dass** das Anzeigeelement (1) einen Touchscreen besitzt.
